# EUROPEAN PATENT SPECIFICATION

(11) **EP 2 837 869 B1**
(45) Date of publication and mention of the grant of the patent: **27.07.2016**
(21) Application number: 14180550.7
(22) Date of filing: 11.08.2014
(51) Int. Cl.: F16L 31/00, A62C 33/04, E02B 3/10

(54) **Hose coupling, hose part and hose and pump system provided therewith, and method for coupling hose parts**
Schlauchkupplung, Schlauchteil und Schlauch sowie Pumpensystem jeweils versehen mit der Schlauchkupplung und Verfahren zum Verbinden der Schlauchteile
Raccord de tuyau souple, partie de tuyau souple et tuyau souple et système de pompe équipé de celui-ci et procédé de raccordement de parties de tuyau

(30) Priority: 14.08.2013 NL 2011302
(43) Date of publication of application: 18.02.2015
(73) Proprietor: Hytrans Beheer B.V., 8531 AA Lemmer (NL)
(72) Inventor: Hut, Robert Dirk, 9005 PN Wergea (NL)
(74) Representative: Verdijck, Gerardus

(56) References cited:
- DE-A1- 2 510 250
- DE-A1- 10 038 592
- FR-A1- 2 919 910
- GB-A- 1 576 858

## Description

The present invention relates to a hose coupling for coupling hose parts. Such hose parts relate particularly to hose parts for a pump system for pumping away excess water, for instance in the case of flooding.

In the case of hose couplings for hose parts known in practice use is made of hooks and eyelets which are provided on the outer ends of two hose parts to be mutually connected. These hooks and eyelets have to be connected to each other. It is found difficult in practice to connect all hooks and eyelets to each other in correct manner without the risk of detachment, of outer ends or edges of the hose parts being wholly or partially folded over, resulting in an increased risk of leakage and of the hose parts not fully connecting to each other. In addition, mutually coupling hose parts is found to be relatively time-consuming.

GB 1 576 858 A, DE 25 10 250 A1, DE 100 38 592 A1 and FR 2 919 910 A1 disclose coupling elements.

The object of the present invention is to provide a hose coupling which obviates or reduces the above stated problems.

This object is achieved with the hose coupling according to claim 1.

Providing an eyelet on an outer end of a first hose part and a coupling element on an outer end of a second hose part makes it possible to connect the two outer ends of the individual hose parts to each other by coupling eyelet and coupling element. Providing a guide achieves that the guide can first be threaded through an eyelet. The coupling element can then also be pulled through the eyelet by exerting force on the guide. The coupling element can hereby be threaded through the eyelet in effective manner. In a currently preferred embodiment the coupling element is provided as a hook or bracket.

In an intended application the coupling is used to connect individual hose parts in order to pump away excess water, for instance in the case of flooding. A hose part is for instance provided here with a length of about 5 metres, with a diameter of about 30 cm in use. An operating pressure of about 1-4 bar, usually about 2 bar, is usually employed in practice. It has been found that the coupling according to the invention provides in effective manner a system which is practical and flexible in use.

In a currently preferred embodiment according to the invention the guide comprises a cord. In the context of the invention a cord is understood to mean an element with which a pulling force can be exerted on the coupling element, including a rope, strip, rod, lead etc. The guide is for instance manufactured from a flexible material of for instance polyester or other plastic, or natural materials such as cotton.

In a further currently preferred embodiment according to the invention the coupling further comprises a tensioning belt for fastening the hose coupling in a connected state. Using such a tensioning belt the coupling can be fixed in simple manner in the connected state, in which the coupling elements have been drawn through the eyelets, and will not become detached during use.

In a further currently preferred embodiment according to the invention the coupling further comprises an elastic band arranged on the second hose part with the coupling elements.

An improved seal is realized by providing an elastic band. During use the liquid pressure in the hose presses the second, inner hose part outward against the first hose part, which is provided with the eyelets. Providing the elastic band on the outer side of the second hose part provides an improved seal between the hose parts so that less leakage will occur at the transition between the hose parts. The elastic band is preferably embodied as a foam band.

In a further currently preferred embodiment according to the invention the coupling further comprises a substantially non-elastic band arranged on the first hose part.

Providing a substantially non-elastic band, preferably on the outer side of the first hose part in which the eyelets are arranged, effects a further mutual fixation of the two hose parts. The band prevents/reduces expansion in diameter of the hose during use resulting from the liquid pressure employed. The non-elastic band is preferably positioned on the first hose part such that in a connected position during use it lies substantially at a position, directly or indirectly, around the elastic band on the second hose part. The fixation at the position of the improved seal is hereby further optimized.

In a further currently preferred embodiment according to the invention the coupling further comprises a stretchable ring or string arranged on the second hose part.

A relative positioning of the two hose parts which is optimal in use is brought about by providing a stretchable ring or string. Leakage is hereby further prevented.

The present invention further relates to a hose part, hose and/or a pump system provided with a hose coupling as described above.

Such a hose part, hose and/or pump unit provides the same effects and advantages as described above in respect of the hose coupling.

In a currently preferred embodiment the hose part or the hose according to the invention is provided on a first outer end with a number of eyelets and on a second outer end with a number of coupling elements connectable to the eyelets.

In a currently preferred embodiment the number of eyelets and coupling elements of the hose part or hose according to the invention lies between 5 and 30, and preferably amounts to about 12-25. It has been found that such a number on the one hand provides a manageable coupling and on the other results in a coupling which operates in practice and provides sufficient sealing.

In a further currently preferred embodiment the hose part or the hose is provided on an outer end with one, preferably at least two, incisions extending substantially in longitudinal direction of the hose part or the hose. With such incisions a flap on the outer end of a hose part can be folded back during attachment thereof to another hose part. It has been found that hose parts can hereby be coupled to each other in more efficient manner. The speed of coupling and uncoupling of hose parts can hereby be increased. One or more flaps which can cover the incisions are optionally provided. An additional protection against leakage is hereby provided. Additionally or alternatively provided over the periphery of the hose part is a sealing ring which imparts a degree of clamping relative to the hose part for coupling, and thereby realizes a sealing.

Although the incisions can also be applied individually to any type of coupling, it has been found that, when applied in combination with the hose coupling according to the invention, hose parts can be coupled in the most effective manner, wherein sufficient sealing against leakage is realized.

The invention further also relates to a method for coupling hose parts according to claim 13.

Further advantages, features and details of the invention are elucidated on the basis of the preferred embodiments thereof, wherein reference is made to the accompanying drawings, in which:
- figure 1 shows a view of a hose coupling according to the invention;
- figures 2-3 show a view of the realization of the coupling of figure 1;
- figure 4 shows a view of an incision according to the invention;
- figures 5-6 show views of a system according to the invention; and
- figure 7 shows a view of the hose coupling with elastic and non-elastic bands. Hose coupling 2 (Figure 1) comprises eyelets or openings 4 in outer end 6 of first hose part 8. Coupling 2 further comprises hooks 10 on outer end 12 of second hose part 14 on which guides 16 are arranged. Hooks 10 are fixed in the shown coupled position with tensioning belt 18.

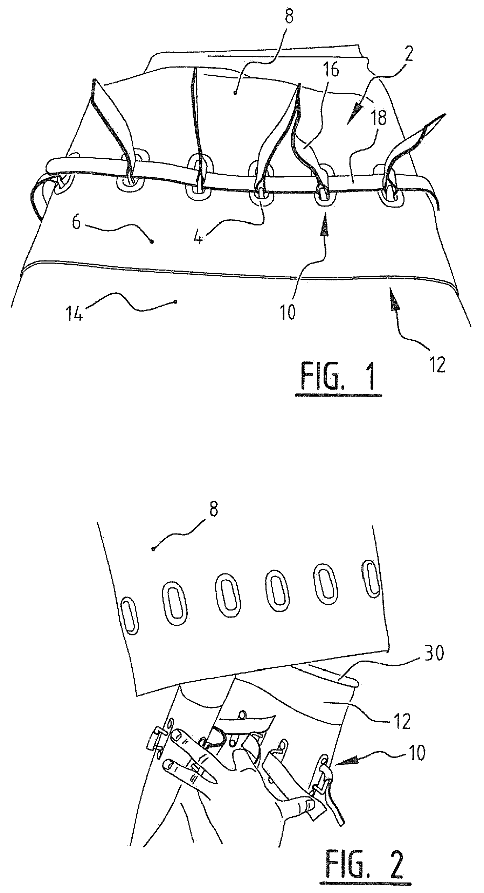

For the purpose of realizing coupling 2 (Figures 2-3) the second flexible hose part 14 is pressed together and pushed into outer end 6 of first hose part 8. Guides 16 are then threaded through openings 4 and tightened until hooks 10 protrude through openings 4. Tensioning belt 18 can then be arranged.

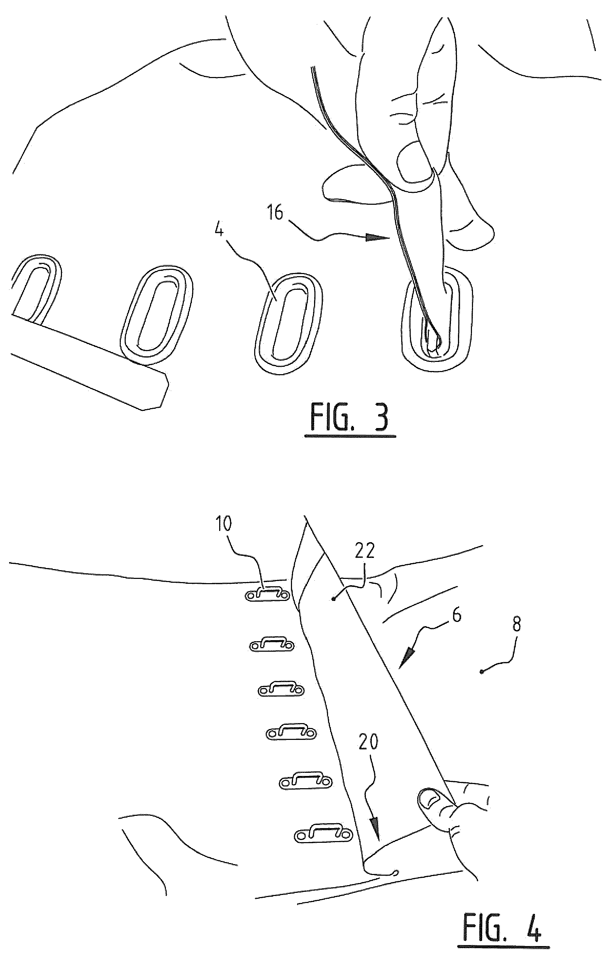

In a possible embodiment (Figure 4) outer end 6 of first hose part 8 is provided with incisions 20. In the shown embodiment the number of incisions 20 amounts to two. Outer end 6 is divided into flaps 22 by incisions 20.

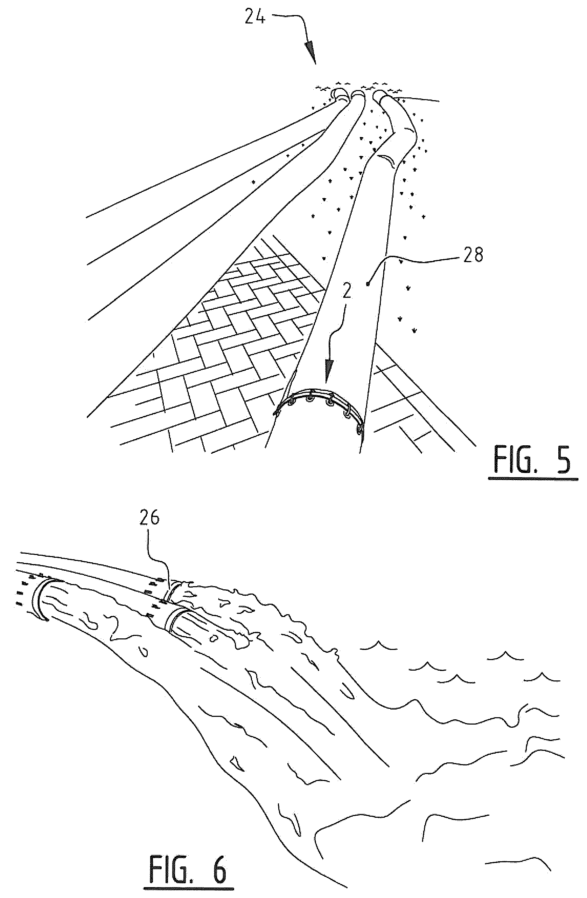

Hose system or pump system 24 (Figures 5-6) consists of a number of coupled hose parts 8, 14. Water flows via outlet 26 to an external reservoir or drain. Hose 28 is formed by connecting a number of hose parts 8, 14 using coupling 2.

In the shown embodiment outer end 12 of the, during use inner, second hose part 14 is provided with ring 30 which imparts a form-retention to outer end 12 and realizes a seal against the inner wall of outer end 6 of first hose part 8.

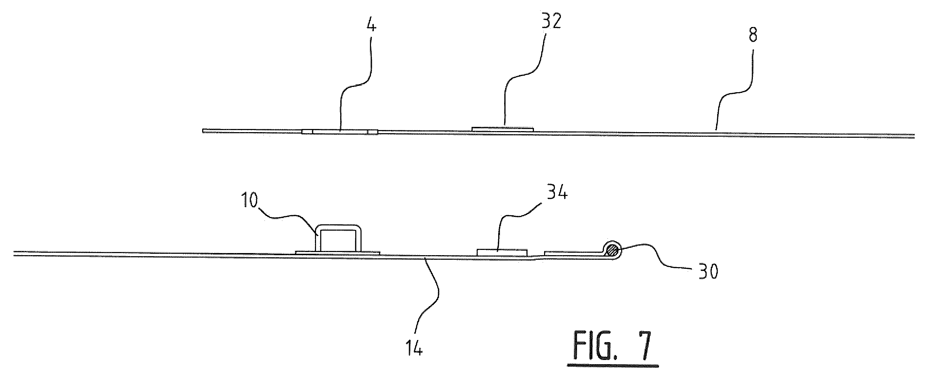

Ring 30 (Figure 7) in the shown embodiment is provided as a string of a material with a diameter of about 10 mm and is provided all around the outer end of hose part 14 on which hooks or brackets 10 are arranged. Inner hose part 14 is further provided in the shown embodiment with an elastic band 34 of a foam material at a distance of about 70 mm from hook or brackets 10. Provided in the shown embodiment on outer hose part 8 is non-elastic band 32 against which elastic band 34 will press during use as a result of the liquid pressure. A good seal is hereby provided between hose parts 10, 14.

Hose or pump system 24 is installed for the purpose of draining excess water. It is customary in practice to have hose 28 available in already coupled state and to adjust its length by uncoupling coupling 2. After draining of the excess water the uncoupled hose parts 8, 14 are stored away again coupled in the above discussed manner using coupling 2. It is of course also possible to couple the hose parts to the correct length using coupling 2 prior to the draining.

The present invention is by no means limited to the above described embodiments thereof. The rights sought are defined by the following claims, within the scope of which many modifications can be envisaged. It is thus possible to provide hose parts 8, 14 of different materials, optionally differing from usual materials for (fire) hoses. It is also possible to provide auxiliary flaps close to incisions 20 for further sealing of the latter as complement to sealing ring 30.

## Claims

1. Hose coupling (2) for mutually coupling hose parts comprising:
- a first hose part (8);
- a second hose part (14);
- an eyelet (4) provided on the first hose part;
- a coupling element (10) provided on the second hose part;
**characterised in that** the hose coupling further comprises a guide (16) which is connected to the coupling element (10) and which is configured to be threaded through the eyelet (4) such that the coupling element (10) can then be threaded through the eyelet (4) for the purpose of connecting the first and second horse parts (8, 14).

2. Hose coupling as claimed in claim 1, wherein the guide comprises a cord.

3. Hose coupling as claimed in claim 1 or 2, further comprising a tensioning belt (18) for fixing the hose coupling in a connected state.

4. Hose coupling as claimed in claim 1, 2 or 3, further comprising an elastic band (34) arranged on the second hose part with the coupling elements.

5. Hose coupling as claimed in one or more of the foregoing claims, further comprising a substantially non-elastic band (32) arranged on the first hose part.

6. Hose coupling as claimed in claim 5, to the extent dependent on claim 4, wherein the non-elastic band is positioned on the first hose part such that during use it lies around the elastic band arranged on the second hose part.

7. Hose coupling as claimed in one or more of the foregoing claims, further comprising a stretchable ring or string (30) arranged on the second hose part.

8. Hose part or hose provided with a hose coupling (2) as claimed in one or more of the foregoing claims.

9. Hose part or hose as claimed in claim 8, wherein a hose part is provided on a first outer end (6) with a number of eyelets and is provided on a second outer end (12) with a number of coupling elements.

10. Hose part or hose as claimed in claim 9, wherein the number of eyelets and coupling elements lies between 5 and 30, and preferably amounts to about 12-25.

11. Hose part or hose as claimed in claim 8, 9 or 10, wherein the hose part or the hose is provided on an outer end with one, preferably at least two, incisions (20) extending substantially in longitudinal direction of the hose part or the hose.

12. Pump unit (24) provided with a hose coupling and/or hose as claimed in one or more of the foregoing claims.

13. Method for coupling hose parts, comprising the steps of:
- providing a hose coupling (2) with hose parts as claimed in one or more of the foregoing claims;
- threading through the eyelet (4) of the first hose part (8) the guide (16) connected to the coupling element (10) of the second hose part (14);
- threading the coupling element (10) through the eyelet (4) using the guide (16); and
- fastening the coupling elements (10) such that they remain fixed through the eyelet (4) and couple the first and second hose parts (8, 14).

## Patentansprüche

1. Schlauchkupplung (2) zum gegenseitigen Kuppeln von Schlauchteilen, umfassend:
- ein erstes Schlauchteil (8),
- ein zweites Schlauchteil (14),
- eine an dem ersten Schlauchteil vorgesehene Öse (4),
- ein an dem zweiten Schlauchteil vorgesehenes Kupplungselement (10),
**dadurch gekennzeichnet, dass** die Schlauchkupplung ferner ein Führungsteil (16) umfasst, das mit dem Kupplungselement (10) verbunden ist und das ausgelegt ist, um durch die Öse (4) derart gefädelt zu werden, dass das Kupplungselement (10) dann durch die Öse (4) zum Zwecke des Verbindens der ersten und zweiten Schlauchteile (8, 14) gefädelt werden kann.

2. Schlauchkupplung nach Anspruch 1, wobei das Führungsteil eine Schnur umfasst.

3. Schlauchkupplung nach Anspruch 1 oder 2, ferner umfassend einen Spannriemen (18) zum Fixieren der Schlauchkupplung in einem verbundenen Zustand.

4. Schlauchkupplung nach Anspruch 1, 2, oder 3, ferner umfassend ein elastisches Band (34), welches an dem zweiten Schlauchteil mit den Kupplungselementen angeordnet ist.

5. Schlauchkupplung nach einem oder mehreren der vorhergehenden Ansprüche, ferner umfassend ein im Wesentlichen nicht-elastisches Band (32), welches an dem ersten Schlauchteil angeordnet ist.

6. Schlauchkupplung nach Anspruch 5 im Ausmaß der Abhängigkeit von Anspruch 4, wobei das nicht-elastische Band an dem ersten Schlauchteil derart positioniert ist, dass es während des Gebrauchs um das elastische Band liegt, welches an dem zweiten Schlauchteil angeordnet ist.

7. Schlauchkupplung nach einem oder mehreren der vorhergehenden Ansprüche, ferner umfassend einen streckbaren Ring oder Faden (30), der an dem zweiten Schlauchteil angeordnet ist.

8. Schlauchteil oder Schlauch, das bzw. der mit einer Schlauchkupplung (2) nach einem oder mehreren der vorhergehenden Ansprüche versehen ist.

9. Schlauchteil oder Schlauch nach Anspruch 8, wobei ein Schlauchteil an einem ersten äußeren Ende (6) mit einer Anzahl von Ösen und an einem zweiten äußeren Ende (12) mit einer Anzahl von Kupplungselementen versehen ist.

10. Schlauchteil oder Schlauch nach Anspruch 9, wobei die Anzahl der Ösen und der Kupplungselemente zwischen 5 und 30 liegt und vorzugsweise etwa 12 bis 25 beträgt.

11. Schlauchteil oder Schlauch nach Anspruch 8, 9 oder 10, wobei das Schlauchteil oder der Schlauch an einem äußeren Ende mit einem, vorzugsweise mit zumindest zwei Einschnitten (20) versehen ist, die im Wesentlichen in Längsrichtung des Schlauchteiles oder des Schlauches verlaufen.

12. Pumpeinheit (24), die mit einer Schlauchkupplung und/oder einem Schlauch nach einem oder mehreren der vorhergehenden Ansprüche versehen ist.

13. Verfahren zum Verbinden von Schlauchteilen, umfassend die Schritte:
- Bereitstellen einer Schlauchkupplung (2) mit Schlauchteilen nach einem oder mehreren der vorhergehenden Ansprüche,
- Durchfädeln des mit dem Kupplungselement (10) des zweiten Schlauchteiles (14) verbundenen Führungsteiles (16) durch die Öse (4) des ersten Schlauchteiles (8),
- Durchfädeln des Kupplungselements (10) durch die Öse (4) unter Verwendung des Führungsteiles (16) und
- Befestigen der Kupplungselemente (10) derart, dass sie durch die Öse (4) fixiert bleiben und die ersten und zweiten Schlauchteile (8, 14) verbinden.

## Revendications

1. Raccord de tuyau (2) destiné à raccorder mutuellement des parties de tuyau comprenant :
une première partie de tuyau (8) ;
une seconde partie de tuyau (14) ;
un oeillet (4) formé sur la première partie de tuyau ;
un élément de raccord (10) agencé sur la seconde partie de tuyau ;
**caractérisé en ce que** le raccord de tuyau comprend en outre un guide (16) qui est raccordé à l'élément de raccord (10) et qui est configuré de manière à être enfilé à travers l'oeillet (4) de telle sorte que l'élément de raccord (10) peut ainsi être enfilé à travers l'oeillet (4) dans le but de raccorder les première et seconde parties de tuyau (8, 14).

2. Raccord de tuyau selon la revendication 1, dans lequel le guide est constitué par une corde.

3. Raccord de tuyau selon la revendication 1 ou 2, comprenant en outre une sangle de tension (18) destinée à maintenir le raccord de tuyau dans un état raccordé.

4. Raccord de tuyau selon la revendication 1, 2 ou 3, comprenant en outre une bande élastique (34) agencée sur la seconde partie de tuyau avec les éléments de raccord.

5. Raccord de tuyau selon une ou plusieurs des revendications précédentes, comprenant en outre une bande sensiblement non élastique (32) agencée sur la première partie de tuyau.

6. Raccord de tuyau selon la revendication 5, dans la mesure où celle-ci dépend de la revendication 4, dans lequel la bande non élastique est positionnée sur la première partie de tuyau de telle sorte qu'en cours d'utilisation elle repose autour de la bande élastique agencée sur la seconde partie de tuyau.

7. Raccord de tuyau selon une ou plusieurs des revendications précédentes, comprenant en outre une bague ou une chaîne pouvant être étirée (30) agencée sur la seconde partie de tuyau.

8. Partie de tuyau ou tuyau équipé d'un raccord de tuyau (2) selon une ou plusieurs des revendications précédentes.

9. Partie de tuyau ou tuyau selon la revendication 8, dans lequel une partie de tuyau comporte, sur une première extrémité externe (6), un certain nombre d'oeillets, et comporte, sur une seconde extrémité externe (12), un certain nombre d'éléments de raccord.

10. Partie de tuyau ou tuyau selon la revendication 9, dans lequel le nombre d'oeillets et d'éléments de raccord est compris entre 5 et 30, et, de préférence, s'élève entre 12 et 25 environ.

11. Partie de tuyau ou tuyau selon la revendication 8, 9 ou 10, dans lequel la partie de tuyau ou le tuyau comporte, sur une première extrémité externe de celui-ci, une, préféremment au moins deux incisions (20) s'étendant sensiblement dans la direction longitudinale de la partie de tuyau ou du tuyau.

12. Unité de pompage (24) comportant un raccord de tuyau et/ou tuyau selon une ou plusieurs des revendications précédentes.

13. Procédé de couplage de parties de tuyau, comprenant les étapes de :
- préparation d'un raccord de tuyau (2) avec des parties de tuyau selon une ou plusieurs des revendications précédentes ;
- enfilage, à travers l'oeillet (4) de la première partie de tuyau (8), du guide (16) relié à l'élément de raccord (10) de la seconde partie de tuyau (14) ;
- enfilage de l'élément de raccord (10) à travers l'oeillet (4) en utilisant le guide (16) ; et
- fixation des éléments de raccord (10) de telle sorte qu'ils restent fixés à travers l'oeillet (4) et couplent les première et seconde parties de tuyau (8, 14).
